# EUROPEAN PATENT APPLICATION

(11) **EP 3 866 022 A2**
(43) Date of publication of application: **18.08.2021**
(21) Application number: 21179081.1
(22) Date of filing: 11.06.2021
(51) Int. Cl.: G06F 16/16

(54) **TRANSACTION PROCESSING METHOD AND DEVICE, ELECTRONIC DEVICE AND READABLE STORAGE MEDIUM**

(30) Priority: 20.11.2020 CN 202011313702
(71) Applicant: BEIJING BAIDU NETCOM SCIENCE AND TECHNOLOGY CO. LTD., 100085 Beijing (CN)
(72) Inventor: YANG, Yongqiang, Beijing, 100085 (CN); ZHENG, Pengfei, Beijing, 100085 (CN); SUN, Yan, Beijing, 100085 (CN); ZHOU, Fei, Beijing, 100085 (CN); LU, Wei, Beijing, 100085 (CN); WANG, Meng, Beijing, 100085 (CN)
(74) Representative: Studio Torta S.p.A.

(57) **Abstract**

A transaction processing method, a transaction processing device, an electronic device and a readable storage medium are provided, which relate to the field of cloud service and cloud storage. The transaction processing method includes: receiving an operation request for a target shard in a directory tree of a file system, the directory tree of the file system being stored in a namespace of a distributed file system, the directory tree of the file system including a plurality of shards, each of the shards including data about a parent node identifier; converting the operation request into a transaction operation statement associated with the target shard; and processing the target shard in accordance with the transaction operation statement. According to the present disclosure, it is able to reduce a collision rate of transaction processing.

## Description

### TECHNICAL FIELD

The present disclosure relates to the field of computer technology, in particular to the field of cloud services and cloud storage.

### BACKGROUND

Namespace, e.g., hierarchical namespace, is a core piece of a distributed file system, and a directory tree of the file system is stored in the namespace. Usually, the directory tree of the file system is of a hierarchical structure including a plurality of index nodes, and each index node includes one parent node and a plurality of child nodes. In this case, due to a complex relation among the nodes in the directory tree of the file system, currently, an operation on the directory tree of the file system is usually a transaction operation across the nodes.

### SUMMARY

An object of the present disclosure is to provide a transaction processing method, a transaction processing device, an electronic device and a readable storage medium.

In one aspect, the present disclosure provides in some embodiments a transaction processing method, including: receiving an operation request for a target shard in a directory tree of a file system, the directory tree of the file system being stored in a namespace of a distributed file system, the directory tree of the file system including a plurality of shards, each of the shards including data about a parent node identifier; converting the operation request into a transaction operation statement associated with the target shard; and processing the target shard in accordance with the transaction operation statement.

In another aspect, the present disclosure provides in some embodiments a transaction processing device, including: a reception module configured to receive an operation request for a target shard in a directory tree of a file system, the directory tree of the file system being stored in a namespace of a distributed file system, the directory tree of the file system including a plurality of shards, each of the shards including data about a parent node identifier; a conversion module configured to convert the operation request into a transaction operation statement associated with the target shard; and a processing module configured to process the target shard in accordance with the transaction operation statement.

In yet another aspect, the present disclosure provides in some embodiments an electronic device, including at least one processor and a memory in communication with the at least one processor. The memory is configured to store therein an instruction configured to be executed by the at least one processor, and the at least one processor is configured to execute the instruction so as to implement the above-mentioned method.

In still yet another aspect, the present disclosure provides in some embodiments a non-transitory computer-readable storage medium storing therein a computer instruction. The computer instruction is executed by a computer so as to implement the above-mentioned method.

According to the embodiments of the present disclosure, it is able to solve the problem that there is a large collision rate caused by a transaction operation across nodes on the directory tree of the file system, thereby to reduce the collision rate of the transaction processing.

It should be understood that, this summary is not intended to identify key features or essential features of the embodiments of the present disclosure, nor is it intended to be used to limit the scope of the present disclosure. Other features of the present disclosure will become more comprehensible with reference to the following description.

### BRIEF DESCRIPTION OF THE DRAWINGS

The following drawings are provided to facilitate the understanding of the present disclosure, but shall not be construed as limiting the present disclosure. In these drawings,
Fig.1 is a schematic view showing a directory tree of a file system according to an embodiment of the present disclosure;
Fig.2 is a diagram of a data table corresponding to the directory tree of the file system in

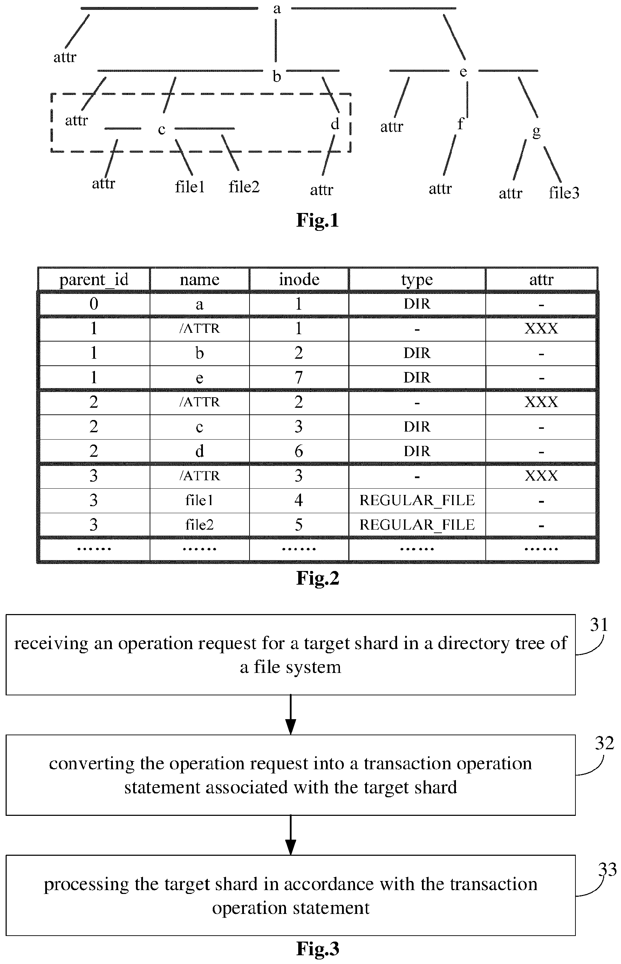

Fig.1 according to an embodiment of the present disclosure;
Fig.3 is a flow chart of a transaction processing method according to an embodiment of the present disclosure;

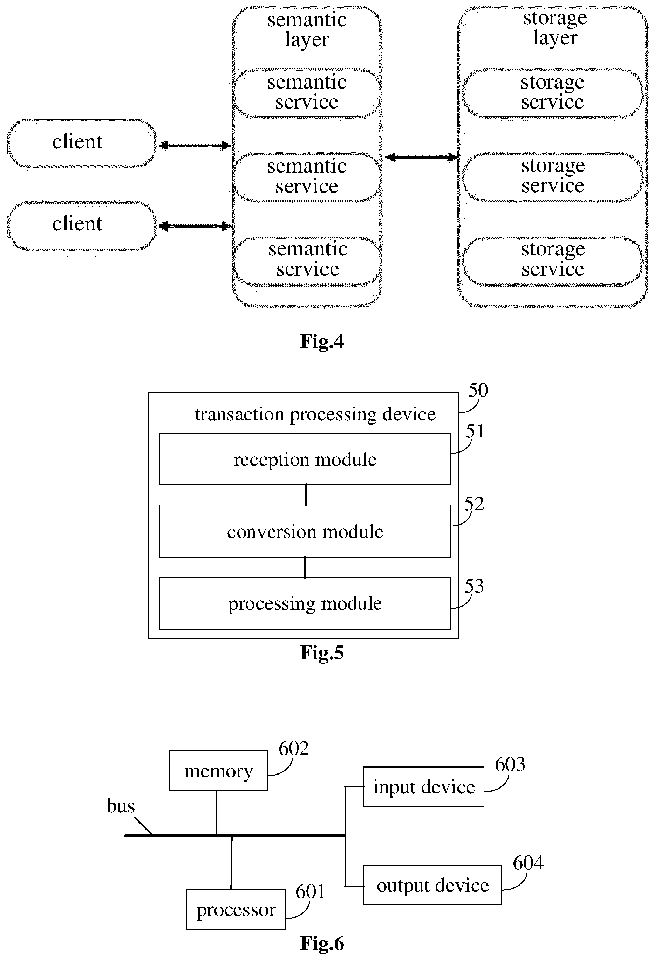

Fig.4 is a schematic view showing a transaction processing procedure according to an embodiment of the present disclosure;
Fig.5 is a schematic view showing a transaction processing device according to an embodiment of the present disclosure; and
Fig.6 is a block diagram showing an electronic device for the transaction processing method according to an embodiment of the present disclosure.

### DETAILED DESCRIPTION

In the following description, numerous details of the embodiments of the present disclosure, which should be deemed merely as exemplary, are set forth with reference to accompanying drawings to provide an understanding of the embodiments of the present disclosure. Therefore, those skilled in the art will appreciate that modifications or replacements may be made in the described embodiments without departing from the scope and spirit of the present disclosure. Further, for clarity and conciseness, descriptions of known functions and structures are omitted.

Such words as "first" and "second" involved in the specification and the appended claims are merely used to differentiate different objects rather than to represent any specific order. It should be appreciated that, the data used in this way may be replaced with each other, so as to implement the embodiments in an order other than that shown in the drawings or described in the specification. In addition, such terms as "include" or "including" or any other variations involved in the present disclosure intend to provide non-exclusive coverage, so that a procedure, method, system, product or device including a series of steps or units may also include any other elements not listed herein, or may include any inherent steps or units of the procedure, method, system, product or device. The expression "and/or" in the specification and the appended claims is used to represent at least one of listed objects.

Cloud service is an Internet-based mode of adding, using and interacting related services, and usually it refers to providing dynamic, easily-extendable and virtualized resources via Internet. Cloud is a metaphor of network or Internet. Usually, the cloud service refers to the acquisition of a desired service in an on-demand and easily-extendable manner via the network, and this service may be related to Information Technology (IT), software or Internet, or any other service.

Cloud storage is an online storage mode, i.e., the storage of data in a plurality of virtual servers hosted by a third party rather than a dedicated server. A concept of the cloud storage is similar to cloud computing. The cloud computing refers to a technology system of accessing, via the network, an elastic, expandable, shared physical or virtual resource pool (resources may include a server, an operating system, a network, software, an application and a storage device), and deploying and managing the resources in an on-demand and self-service manner. Through the cloud computing technology, it is able to provide an efficient and powerful data processing capability for the application and model training of such technologies as artificial intelligence and blockchain.

Fig.1 is a schematic view showing a directory tree of a file system according to an embodiment of the present disclosure, and Fig.2 is a diagram of a data table corresponding to the directory tree of the file system in Fig.1. As shown in Figs.1 and 2, the directory tree of the file system in the embodiments of the present disclosure is of a hierarchical structure including a plurality of index nodes, and attribute information of each of the index nodes includes, but not limited to, a node type, a node size, a node state modification time mtime, and the quantity nlink of child nodes under the node. The attribute information may be extended appropriately in accordance with a specific implementation. Each index node includes a parent node and a plurality of child nodes. Each index node is provided with a unique index number inode.

Taking the directory tree of the file system in Fig.1 as an example, the directory tree of the file system includes 10 index nodes, i.e., a, b, c, d, e, f, g, file1 and file2. A parent node of b is a, child nodes of b are c and d, a brother node of b is e, and attr represents an attribute, specifically an attribute of the parent node. An attr node externally occurs in the form of an individual node, i.e., an operation result for a list of a/b merely includes c and d. It should be appreciated that, the directory tree of the file system in Fig.1 is for illustrative, rather than restrictive purposes.

In order to solve the problem that there is currently a large collision caused by a transaction operation across nodes on the directory tree of the file system, in the embodiments of the present disclosure, with respect to the directory tree of the file system, data sharding may be performed in accordance with a parent node identity (parent_id), so that the directory tree of the file system includes a plurality of shards. Each shard may include data about one parent node identity, i.e., data about a same parent node identity may be located in one shard. The parent node identity may be, e.g., an index number of the parent node. For example, taking a parent node b in Fig.1 as an example, data about an index number 2, i.e., data indicated by a dotted box in Fig.1, may be located in one shard. In this way, it is able to replace an operation on the directory tree of the file system in the related art with an operation in the shard. In addition, the data about the same parent node identity is located in the shard, so it is able to reduce a collision rate of the operation in the shard, thereby to reduce the collision rate of the transaction processing.

In a possible embodiment of the present disclosure, a replication group may be provided for the shard, i.e., within one replication group, multiple copies may be used to provide services through multiple servers. In addition, in the case that one server fails, the services may be provided through the other servers, so as to improve the availability and reliability.

Fig.3 is a flow chart of a transaction processing method according to an embodiment of the present disclosure. As shown in Fig.3, the transaction processing method for an electronic device includes the following steps.

Step 31: receiving an operation request for a target shard in a directory tree of a file system.

In the embodiments of the present disclosure, the directory tree of the file system may be stored in a namespace of a distributed file system, and the namespace may be, for example, a hierarchical namespace. The directory tree of the file system may include a plurality of shards, and each shard may include data about one parent node identity, i.e., data about a same parent node identity may be located in one shard.

In a possible embodiment of the present disclosure, the operation request may include, but not limited to, a create request, a lookup request, a rename request, etc.

In a specific instance, the distributed file system may include a plurality of clients, and the operation request may be transmitted by a user via any client.

Step 32: converting the operation request into a transaction operation statement associated with the target shard.

In the embodiments of the present disclosure, the operation request may be provided with respect to the target shard in the directory tree of the file system, and the target shard may be one or more shards. Based on this, the operation request may be converted into the transaction operation statement associated with the target shard in accordance with the target shard corresponding to the operation request.

Step 33: processing the target shard in accordance with the transaction operation statement.

It should be appreciated that, because the transaction operation statement is associated with the target shard, the corresponding target shard may be processed in accordance with the transaction operation statement.

According to the transaction processing method in the embodiments of the present disclosure, the operation request for the target shard in the directory tree of the file system may be received, the directory tree of the file system may include the plurality of shards, and each shard may include the data about one parent node identity. Then, the operation request may be converted into the transaction operation statement associated with the target shard, and the target shard may be processed in accordance with the transaction operation statement. Hence, it is able to replace an operation on the directory tree of the file system in the related art with an operation in the shard. In addition, the data about the same parent node identity is located in the shard, so it is able to reduce a collision rate of the operation in the shard, thereby to reduce a collision rate of the transaction processing.

In a possible embodiment of the present disclosure, in order to flexibly adjust and expand the shards in the directory tree of the file system, the namespace may include a semantic layer and a storage layer. The directory tree of the file system may be stored in the storage layer. The storage layer may be understood as a Not Only Structured Query Language (NoSQL)/ New Structured Query Language (NewSQL) supporting transactions and secondary index. The semantic layer itself is stateless, and it may provide a semantic logic on the basis of the storage layer.

In other words, the namespace in the embodiments of the present disclosure may substantially provide a storage function and a semantic function for storage and operation of the directory tree of the file system respectively. The term "storage" refers to that a content of the directory tree of the file system may not be lost, and the term "operation" refers to such operations on the directory tree as create, rmdir, lookup and rename.

In a possible embodiment of the present disclosure, when the namespace includes the semantic layer and the storage layer, the converting the operation request into the transaction operation statement associated with the target shard may specifically include converting the operation request into the transaction operation statement associated with the target shard in the semantic layer. The processing target shard in accordance with the transaction operation statement may specifically include processing the target shard in accordance with the transaction operation statement in the storage layer. In this way, the storage layer may provide extensibility, availability and reliability and support the transaction processing, and the semantic layer may provide the semantic logic, so it is able for the storage to be separated from the operation, thereby to flexibly adjust and extend the shard in the storage layer.

For example, as shown in Fig.4, the operation request initiated by a client may be disassembled, in the semantic layer, into several transaction operations for the storage layer by means of semantic services, and a corresponding transaction operation may be executed in the storage layer by means of storage services.

In the embodiments of the present disclosure, the data sharding may be performed on the directory tree of the file system in accordance with the parent node identity, and the operation request may be initiated in accordance with a primary key (parent_id, name), i.e., the parent node identity, and a name of a corresponding child node. In a possible embodiment of the present disclosure, the operation request may include the parent node identity and a name of the child node under a parent node corresponding to the parent node identity, and the parent node identity may be used to indicate the target shard.

Detailed description will be given hereinafter in conjunction with a specific transaction processing procedure.

1) A transaction may be created, i.e., the operation request for the target shard in the directory tree of the file system may include a create request.

In 1), the create request may at least include the parent node identity and the name of each child node under the parent node corresponding to the parent node identity. The parent node identity may be used to indicate the target shard, and the name of each child node may be used to indicate the addition of data about the child node in the target shard.

Further, subsequent to the receipt of the create request, an index number of the child node and an insertion transaction statement may be generated in accordance with the name of the child node. The insertion transaction statement may include an attribute identity and the index number of the child node. Then, the data about the child node may be added into the target shard in accordance with the generated insertion transaction statement, so as to complete a creation process.

In a possible embodiment of the present disclosure, subsequent to generating the index number of the child node, an update transaction statement may also be generated. The update transaction statement may be used to indicate that attribute information about a corresponding parent node is to be updated, and the update transaction statement may at least include the parent node identity and the name of the child node. Then, the attribute information about the corresponding parent node may be updated in the target shard in accordance with the generated update transaction statement.

In this regard, it is able to flexibly extend the shard using the parent node identity.

For example, taking the directory tree of the file system in Fig.1 as an example, a process of creating b under a parent node a may include: S1 of initiating, by a client, a create request such as create(1, b); S2 of generating a unique inode number 2 for b in the semantic layer; S3 of generating an insertion transaction statement, e.g., insert(2, /ATTR) in the semantic layer and transmitting it to the storage layer, so as to add data about b in a target shard indicated by an inode number 1 through storage services; and S4 of generating an update transaction statement, e.g., insert_with_update(1, b), in the semantic layer and transmitting it to the storage layer, so as to update the attribute information about the parent node in the target shard through storage services. The operation in S4 implicitly includes adding an attribute nlink of (1, /ATTR) and updating an attribute such as mtime of (1, /ATTR). It should be appreciated that, S3 and S4 are two separate operations, so they may be performed concurrently.

2) The transaction may be looked up, i.e., the operation request for the target shard in the directory tree of the file system may include a lookup request.

In 2), the lookup request may at least include the parent node identity and the name of each child node under the parent node corresponding to the parent node identity. The parent node identity may be used to indicate the target shard, and the name of the child node may be used to indicate that the data about the child node is to be looked up in the target shard.

Further, upon the receipt of the lookup request, an index number of the child node may be acquired in accordance with the name of the child node, and a lookup transaction statement may be generated. The lookup transaction statement may include an attribute identity and the index number of the child node. Then, the data about the child node may be looked up from the target shard in accordance with the generated lookup transaction statement, so as to complete a lookup process. In this way, the lookup process may be accelerated using the parent node identity.

For example, taking the directory tree of the file system in Fig.1 as an example, a process of looking up b under a parent node a may include: S1 of initiating, by a client, a lookup request, e.g., lookup (1, b); S2 of generating the lookup transaction statement, e.g., get(1, b), in the semantic layer and transmitting it to the storage layer, so as to acquire an inode number 2 of b through the storage services; S3 of generating the lookup transaction statement, e.g., get(2, /ATTR) in the semantic layer and transmitting it to the storage layer, so as to acquire data about b, e.g., attribute information, in the target shard indicated by an inode number 1 through the storage services; and S4 of returning the attribute information about b to the client.

3) The transaction may be renamed, i.e., the operation request for the target shard in the directory tree of the file system may include a rename request.

A rename operation refers to the movement of one index node to another position in the directory tree of the file system. For example, rename(a/b, a/aa) refers to the movement of a node a/b to a/aa. This example relates to the movement under a same parent node directly in a single shard, and no transaction across shards is involved. For another example, rename(a/b, a/e/bb) refers to the movement under different parent nodes, and a transaction across shards is involved.

In a possible embodiment of the present disclosure, in 3), the operation request for the target shard in the directory tree of the file system may include the rename request. In the case that the transaction across shards is not involved, the rename request may include a first parent node identity, a name of a first child node and a name of a second child node. The first parent node identity may be used to indicate the target shard, the name of the first child node may be used to indicate that data about the child node is to be deleted in the target shard, and the name of the second child node may be used to indicate that data about the child node is to be added in the target shard.

Further, upon the receipt of the rename request, an addition/deletion transaction statement may be generated, and it may include the first parent node identity, the name of the first child node and the name of the second child node. Based on the addition/deletion transaction statement, the data about the first child node may be deleted in the target shard indicated by the first parent node identity, and the data about the second child node may be added in the target shard indicated by the first parent node identity. In this way, it is able to flexibly adjust the shard using the parent node identity. For example, taking the directory tree of the file system in Fig.1 as an example, a process of deleting b and adding aa under a parent node a may include: S1 of initiating, by the client, a name request, e.g., rename(1, b, 1, aa); and S2 of generating the addition/deletion transaction statement, e.g., insert_with_delete(1, b, 1, aa), in the semantic layer and transmitting it to the storage layer, so as to delete b and add aa in the target shard indicated by the inode number 1 through the storage services.

In a possible embodiment of the present disclosure, in the case that the transaction across shards is involved, the rename request may include a second parent node identity, a name of a third child node, a third parent node identity and a name of a fourth child node. The second parent node identity and the third parent node identity may each be used to indicate a target shard, the name of the third child node may be used to indicate that data about the child node is to be deleted in a corresponding target shard, and the name of the fourth child node may be used to indicate that data about the child node is to be added in a corresponding target shard.

Further, upon the receipt of the rename request, a deletion transaction statement and an insertion transaction statement may be generated. The deletion transaction statement include the second parent node identity and the name of the third child node, and the insertion transaction statement may include the third parent node identity and the name of the fourth child node. Then, the data about the third child node may be deleted in the target shard indicated by the second parent node identity in accordance with the deletion transaction statement, and the data about the fourth child node may be added in the target shard indicated by the third parent node identity in accordance with the insertion transaction statement. In this way, it is able to flexibly adjust the shards using the parent node identities.

For example, taking the directory tree of the file system in Fig.1 as an example, a process of deleting b under a parent node a and adding aa under a parent node e may include: S1 of initiating, by the client, a name request, e.g., rename(1, b, 7, bb); and S2 of generating the deletion transaction statement, e.g., delete(1, b), and the insertion transaction statement, e.g., insert(7, bb), in the semantic layer and transmitting them to the storage layer, so as to delete b in a target shard indicated by an inode number 1 and add bb in a target shard indicated by an inode number 7 through the storage services.

Fig.5 is a schematic view showing a transaction processing device according to an embodiment of the present disclosure. As shown in Fig.5, the transaction processing device 50 includes: a reception module 51 configured to receive an operation request for a target shard in a directory tree of a file system, the directory tree of the file system being stored in a namespace of a distributed file system, the directory tree of the file system including a plurality of shards, each of the shards including data about a parent node identifier; a conversion module 52 configured to convert the operation request into a transaction operation statement associated with the target shard; and a processing module 53 configured to process the target shard in accordance with the transaction operation statement.

In a possible embodiment of the present disclosure, the namespace may include a semantic layer and a storage layer, the directory tree of the file system may be stored in the storage layer, the conversion module 52 is further configured to convert the operation request into the transaction operation statement associated with the target shard in the semantic layer, and the processing module 53 is further configured to process the target shard in the storage layer in accordance with the transaction operation statement.

In a possible embodiment of the present disclosure, the operation request may include a parent node identity and a name of the child node under a parent node corresponding to the parent node identity, and the parent node identity may be used to indicate the target shard.

In a possible embodiment of the present disclosure, the operation request may include a create request. The conversion module 52 may include: a first generation unit configured to generate an index number of the child node in accordance with the name of the child node; and a second generation unit configured to generate an insertion transaction statement, the insertion transaction statement including an attribute identity and the index number of the child node. The processing module 53 is further configured to add data about the child node to the target shard in accordance with the insertion transaction statement.

In a possible embodiment of the present disclosure, the conversion module 52 may further include a third generation unit configured to generate an update transaction statement, the update transaction statement may include the parent node identity and the name of the child node, and the processing module 53 is further configured to update attribute information about the parent node in the target shard in accordance with the update transaction statement.

In a possible embodiment of the present disclosure, the operation request may include a lookup request. The conversion module 52 may include: an acquisition unit configured to acquire the index number of the child node in accordance with the name of the child node; and a fourth generation unit configured to generate a lookup transaction statement, the lookup transaction statement including an attribute identity and the index number of the child node. The processing module 53 is further configured to look up the data about the child node from the target shard in accordance with the lookup transaction statement.

In a possible embodiment of the present disclosure, the operation request may include a rename request, and the rename request may include a first parent node identity, a name of a first child node and a name of a second child node. The conversion module 52 may include a fifth generation unit configured to generate an addition/deletion transaction statement, and the addition/deletion transaction statement may include the first parent node identity, the name of the first child node and the name of the second child node. The processing module 53 is further configured to delete data about the first child node from a target shard indicated by the first parent node identity and add data about the second child node in the target shard indicated by the first parent node identity in accordance with the addition/deletion transaction statement.

In a possible embodiment of the present disclosure, the operation request may include a rename request, and the rename request may include a second parent node identity, a name of a third chide node, a third parent node identity and a name of a fourth child node. The conversion module 52 may include a sixth generation unit configured to generate a deletion transaction statement and an insertion transaction statement, the deletion transaction statement may include the second parent node identity and the name of the third child node, and the insertion transaction statement may include the third parent node identity and the name of the fourth child node. The processing module 53 is further configured to delete data about the third child node from a target shard indicated by the second parent node identity in accordance with the deletion transaction statement, and add data about the fourth child node in a target shard indicated by the third parent node identity in accordance with the insertion transaction statement.

It should be appreciated that, the transaction processing device 50 in the embodiments of the present disclosure may be used to implement the steps of the above-mentioned transaction processing method in Fig.3 with a same beneficial effect, which will not be particularly defined herein.

The present disclosure further provides in some embodiments an electronic device and a readable storage medium.

Fig.6 is a block diagram of an exemplary electronic device in which embodiments of the present disclosure may be implemented. The electronic device is intended to represent all kinds of digital computers, such as a laptop computer, a desktop computer, a work station, a personal digital assistant, a server, a blade server, a main frame or other suitable computers. The electronic device may also represent all kinds of mobile devices, such as a personal digital assistant, a cell phone, a smart phone, a wearable device and other similar computing devices. The components shown here, their connections and relationships, and their functions, are meant to be exemplary only, and are not meant to limit implementations of the present disclosure described and/or claimed herein.

As shown in Fig.6, the electronic device includes one or more processors 601, a memory 602, and interfaces for connecting the components, e.g., a high-speed interface and a low-speed interface. The components may be connected to each other via different buses, and installed on a common motherboard or installed in any other form according to the practical need. The processor is configured to process instructions to be executed within the electronic device, including an instruction stored in the memory or an instruction stored in the memory for displaying Graphical User Interface (GUI) information on an external input/output device (e.g., a display device coupled to an interface). In some other embodiments of the present disclosure, if necessary, the plurality of processors and/or buses may be used together with a plurality of memories. Identically, a plurality of electronic devices may be provided, and each electronic device may be used to perform a part of necessary operations (e.g., as a server array, a group of blade servers, or a multi-processor system). In Fig.6, one processor 601 is shown as an example.

The memory 602 may be just the non-transitory computer-readable storage medium in the embodiments of the present disclosure. Instructions capable of being executed by at least one processor may be stored in the memory, so as to enable the at least one processor to implement the transaction processing method in the embodiments of the present disclosure. The non-transitory computer-readable storage medium may store therein a computer instruction, and the computer instruction is executed by a computer so as to implement the transaction processing method.

As a non-transitory computer-readable storage medium, the memory 602 may store therein a non-transitory software program, a non-transitory computer-executable program and a module, e.g., program instructions/modules corresponding to the transaction processing method (e.g., the reception module 51, the conversion module 52 and the processing module 53 in Fig.5). The processor 601 is configured to execute the non-transitory software program, instruction and module in the memory 602, so as to execute various function applications in the server as well as data processing, i.e., to implement the above-mentioned transaction processing method.

The memory 602 may include an application storage area and a data storage area. An operating system and at least one application for the functions may be stored in the application storage area. Data created in accordance with the operation of the electronic device for implementing the transaction processing method may be stored in the data storage area. In addition, the memory 602 may include a high-speed random access memory, or a non-transitory memory, e.g., at least one magnetic disk, a flash memory, or any other non-transitory solid-state memory. In some embodiments of the present disclosure, the memory 602 may optionally include memories arranged remotely relative to the processor 601, and these remote memories may be connected to the electronic device for implementing the transaction processing method via a network.

Examples of the network may include, but not limited to, Internet, Intranet, local area network or mobile communication network, or a combination thereof.

The electronic device for implementing the transaction processing method may further include an input device 603 and an output device 604. The processor 601, the memory 602, the input device 603 and the output device 604 may be connected to each other via a bus or the like. In Fig.6, they are connected to each other via a bus.

The input device 603 may receive digital or character information, and generate a key signal input related to user settings and function control of the electronic device for implementing the transaction processing method, e.g., touch panel, keypad, mouse, trackpad, touchpad, indication rod, one or more mouse buttons, track ball, or joystick. The output device 604 may include a display device, an auxiliary lighting device (e.g., light-emitting diode (LED)) or a haptic feedback device (e.g., vibration motor). The display device may include, but not limited to, a liquid crystal display (LCD), an LED display or a plasma display. In some embodiments of the present disclosure, the display device may be a touch panel.

Various implementations of the aforementioned systems and techniques may be implemented in a digital electronic circuit system, an integrated circuit system, an application-specific integrated circuit (ASIC), hardware, firmware, software, and/or a combination thereof. The various implementations may include an implementation in form of one or more computer programs. The one or more computer programs may be executed and/or interpreted on a programmable system including at least one programmable processor. The programmable processor may be a special purpose or general purpose programmable processor, may receive data and instructions from a storage system, at least one input device and at least one output device, and may transmit data and instructions to the storage system, the at least one input device and the at least one output device.

These computer programs (also called as programs, software, software application or codes) may include machine instructions for the programmable processor, and they may be implemented using an advanced process and/or an object oriented programming language, and/or an assembly/machine language. The terms "machine-readable medium" and "computer-readable medium" used in the context may refer to any computer program products, devices and/or devices (e.g., magnetic disc, optical disc, memory or programmable logic device (PLD)) capable of providing the machine instructions and/or data to the programmable processor, including a machine-readable medium that receives a machine instruction as a machine-readable signal. The term "machine-readable signal" may refer to any signal through which the machine instructions and/or data are provided to the programmable processor.

To facilitate user interaction, the system and technique described herein may be implemented on a computer. The computer is provided with a display device (for example, a cathode ray tube (CRT) or liquid crystal display (LCD) monitor) for displaying information to a user, a keyboard and a pointing device (for example, a mouse or a track ball). The user may provide an input to the computer through the keyboard and the pointing device. Other kinds of devices may be provided for user interaction, for example, a feedback provided to the user may be any manner of sensory feedback (e.g., visual feedback, auditory feedback, or tactile feedback); and input from the user may be received by any means (including sound input, voice input, or tactile input).

The system and technique described herein may be implemented in a computing system that includes a back-end component (e.g., as a data server), or that includes a middle-ware component (e.g., an application server), or that includes a front-end component (e.g., a client computer having a graphical user interface or a Web browser through which a user can interact with an implementation of the system and technique), or any combination of such back-end, middleware, or front-end components. The components of the system can be interconnected by any form or medium of digital data communication (e.g., a communication network). Examples of communication networks include a local area network (LAN), a wide area network (WAN) and the Internet.

The computer system can include a client and a server. The client and server are generally remote from each other and typically interact through a communication network. The relationship of client and server arises by virtue of computer programs running on respective computers and having a client-server relationship to each other. The server may also be a server of a distributed system, or a server combined with blockchain.

According to the embodiments of the present disclosure, the operation request for the target shard in the directory tree of the file system may be received, the directory tree of the file system may include the plurality of shards, and each shard may include the data about one parent node identity. Then, the operation request may be converted into the transaction operation statement associated with the target shard, and the target shard may be processed in accordance with the transaction operation statement. Hence, it is able to replace an operation on the directory tree of the file system in the related art with an operation in the shard. In addition, the data about the same parent node identity is located in the shard, so it is able to reduce a collision rate of the operation in the shard, thereby to reduce a collision rate of the transaction processing.

It should be appreciated that, all forms of processes shown above may be used, and steps thereof may be reordered, added or deleted. For example, as long as expected results of the technical solutions of the present disclosure can be achieved, steps set forth in the present disclosure may be performed in parallel, performed sequentially, or performed in a different order, and there is no limitation in this regard.

The foregoing specific implementations constitute no limitation on the scope of the present disclosure. It is appreciated by those skilled in the art, various modifications, combinations, sub-combinations and replacements may be made according to design requirements and other factors. Any modifications, equivalent replacements and improvements made without deviating from the spirit and principle of the present disclosure shall be deemed as falling within the scope of the present disclosure.

## Claims

1. A transaction processing method, comprising:
receiving an operation request for a target shard in a directory tree of a file system (31), the directory tree of the file system being stored in a namespace of a distributed file system, the directory tree of the file system comprising a plurality of shards, each of the shards comprising data about a parent node identifier;
converting the operation request into a transaction operation statement associated with the target shard (32); and
processing the target shard in accordance with the transaction operation statement (33).

2. The transaction processing method according to claim 1, wherein the namespace comprises a semantic layer and a storage layer, the directory tree of the file system is stored in the storage layer;
the converting the operation request into the transaction operation statement associated with the target shard comprises: converting the operation request into the transaction operation statement associated with the target shard in the semantic layer;
the processing the target shard in accordance with the transaction operation statement comprises: processing the target shard in the storage layer in accordance with the transaction operation statement.

3. The transaction processing method according to claim 1, wherein the operation request comprises a parent node identity and a name of a child node under a parent node corresponding to the parent node identity, and the parent node identity is used to indicate the target shard.

4. The transaction processing method according to claim 3, wherein the operation request comprises a create request,
wherein the converting the operation request into the transaction operation statement associated with the target shard comprises:
generating an index number of the child node in accordance with the name of the child node;
generating an insertion transaction statement, the insertion transaction statement comprising an attribute identity and the index number of the child node,
wherein the processing the target shard in accordance with the transaction operation statement comprises: adding data about the child node to the target shard in accordance with the insertion transaction statement.

5. The transaction processing method according to claim 4, wherein
subsequent to generating the index number of the child node, the transaction processing method further comprises: generating an update transaction statement, the update transaction statement comprising the parent node identity and the name of the child node;
the processing the target shard in accordance with the transaction operation statement further comprises: updating attribute information about the parent node in the target shard in accordance with the update transaction statement.

6. The transaction processing method according to claim 3, wherein the operation request comprises a lookup request,
wherein the converting the operation request into the transaction operation statement associated with the target shard comprises:
acquiring the index number of the child node in accordance with the name of the child node; and
generating a lookup transaction statement, the lookup transaction statement comprising an attribute identity and the index number of the child node,
wherein the processing the target shard in accordance with the transaction operation statement comprises: looking up the data about the child node from the target shard in accordance with the lookup transaction statement.

7. The transaction processing method according to claim 3, wherein the operation request comprises a rename request, and the rename request comprises a first parent node identity, a name of a first child node and a name of a second child node;
the converting the operation request into the transaction operation statement associated with the target shard comprises:
generating an addition/deletion transaction statement, and the addition/deletion transaction statement comprising the first parent node identity, the name of the first child node and the name of the second child node;
wherein the processing the target shard in accordance with the transaction operation statement comprises:
deleting data about the first child node from a target shard indicated by the first parent node identity and adding data about the second child node in the target shard indicated by the first parent node identity in accordance with the addition/deletion transaction statement.

8. The transaction processing method according to claim 3, wherein the operation request comprises a rename request, and the rename request comprises a second parent node identity, a name of a third chide node, a third parent node identity and a name of a fourth child node,
wherein the converting the operation request into the transaction operation statement associated with the target shard comprises:
generating a deletion transaction statement and an insertion transaction statement, the deletion transaction statement comprising the second parent node identity and the name of the third child node, and the insertion transaction statement comprising the third parent node identity and the name of the fourth child node,
wherein the processing the target shard in accordance with the transaction operation statement comprises:
deleting data about the third child node from a target shard indicated by the second parent node identity in accordance with the deletion transaction statement, and adding data about the fourth child node in a target shard indicated by the third parent node identity in accordance with the insertion transaction statement.

9. A transaction processing device (60), comprising:
a reception module (51) configured to receive an operation request for a target shard in a directory tree of a file system, the directory tree of the file system being stored in a namespace of a distributed file system, the directory tree of the file system comprising a plurality of shards, each of the shards comprising data about a parent node identifier;
a conversion module (52) configured to convert the operation request into a transaction operation statement associated with the target shard; and
a processing module (53) configured to process the target shard in accordance with the transaction operation statement.

10. The transaction processing device (60) according to claim 9, wherein the namespace comprises a semantic layer and a storage layer, the directory tree of the file system is stored in the storage layer,
the conversion module (52) is further configured to convert the operation request into the transaction operation statement associated with the target shard in the semantic layer;
the processing module (53) is further configured to process the target shard in the storage layer in accordance with the transaction operation statement.

11. The transaction processing device (60) according to claim 9, wherein the operation request comprises a parent node identity and a name of the child node under a parent node corresponding to the parent node identity, and the parent node identity is used to indicate the target shard.

12. The transaction processing device (60) according to claim 11, wherein the operation request comprises a create request,
wherein the conversion module (52) comprises:
a first generation unit configured to generate an index number of the child node in accordance with the name of the child node;
a second generation unit configured to generate an insertion transaction statement, the insertion transaction statement comprising an attribute identity and the index number of the child node,
wherein the processing module (53) is further configured to add data about the child node to the target shard in accordance with the insertion transaction statement.

13. The transaction processing device (60) according to claim 12, wherein the conversion module (52) further comprises:
a third generation unit configured to generate an update transaction statement, the update transaction statement comprising the parent node identity and the name of the child node;
the processing module (53) is further configured to update attribute information about the parent node in the target shard in accordance with the update transaction statement.

14. An electronic device, comprising:
at least one processor (601); and
a memory (602) configured to be in communication connection with the at least one processor (601),
wherein the memory (602) is configured to store therein an instruction capable of being executed by the at least one processor (601), wherein the processor (601) is configured to execute the instruction to implement the transaction processing method according to any one of claims 1 to 8.

15. A non-transitory computer-readable storage medium storing therein a computer instruction, wherein the computer instruction is configured to be executed by a computer to implement the transaction processing method according to any one of claims 1 to 8.
